# EUROPÄISCHE PATENTSCHRIFT

(11) **EP 1 775 565 B1**
(45) Veröffentlichungstag und Bekanntmachung des Hinweises auf die Patenterteilung: **07.05.2008**
(21) Anmeldenummer: 05022584.6
(22) Anmeldetag: 17.10.2005
(51) Int. Cl.: G01J 3/46, G01N 21/25

(54) **Verfahren zur Farbmessung von gedruckten Proben mit Aufhellern**
Method for the colour measurement of printed samples comprising optical brighteners
Procédé de mesure de couleur d'échantillons imprimés comprenant des azurants optiques

(43) Veröffentlichungstag der Anmeldung: 18.04.2007
(73) Patentinhaber: X-Rite Europe AG, 8105 Regensdorf (CH)
(72) Erfinder: Ehbets, Peter, 8046 Zürich (CH); Frick, Beat, 8107 Buchs (CH); Wegmüller, Mark, 8046 Zürich (CH); von Orelli, Adrian, 8008 Zürich (CH)
(74) Vertreter: Muschke, Markus Artur Heinz

(56) Entgegenhaltungen:
- US-A- 4 699 510
- US-A- 6 020 959
- US-A1- 2002 135 768
- US-A1- 2003 169 421

## Beschreibung

Die Erfindung betrifft ein Verfahren zur Farbmessung von auf Substraten mit Aufhellern gedruckten Proben gemäss dem Oberbegriff des unabhängigen Anspruchs 1.

Bei der Herstellung von Papieren werden immer häufiger optische Aufheller verwendet. Optische Aufheller können den Weissgrad des Papiers (allgemein Substrats) verbessern und die Herstellungskosten senken.

Optische Aufheller absorbieren Licht im ultra-violetten (UV-) Wellenlängenbereich von 320 bis 410 nm und re-emittieren Fluoreszenzlicht im sichtbaren blauen Spektralbereich zwischen 420 bis 550 nm. Das Maximum des Fluoreszenzspektrums befindet sich zwischen 430 und 440 nm.

Der Effekt von optischen Aufhellern und die erzeugte Farbe des Papiers werden stark durch die spektrale Verteilung des Beleuchtungslichts, vor allem durch das Verhältnis der Lichtpegel im UV- und im blauen Spektralbereich beeinflusst. Die Farbwiedergabe von bedruckten Proben wird zusätzlich noch durch das Absorptionsverhalten der Farbschicht auf dem Papiersubstrat beeinflusst.

Das nicht-lineare Verhalten von optischen Aufhellern stellt hohe Anforderungen an die Farbmesstechnik. Die Ziele in der Farbmesstechnik sind einerseits Messwerte zu erhalten, die gut mit einer bestimmten visuellen Beobachtungsbedingung mit definiertem Beleuchtungsspektrum korrelieren. Andererseits ist es für die Prozesskontrolle und den Austausch von Messdaten wichtig, dass verschiedene Messgeräte auf den gleichen Proben möglichst identische Messwerte ausgeben.

Die aktuelle Situation der Farbmesstechnik ist zufrieden stellend für bedruckte Proben auf Substraten ohne optische Aufheller. Wenn optische Aufheller eingesetzt werden, treten grössere, nicht zufrieden stellende Abweichungen der Messwerte auf.

Für eine gute Geräteübereinstimmung ist es wichtig, dass die Beleuchtungsspektren in den Geräten identische relative Verteilung im UV und in blauen Spektralbereichen aufweisen. Vor allem im UV Bereich treten grössere Unterschiede zwischen den verschiedenen Messgeräten auf.

Für die Kompatibilität mit der visuellen Betrachtung wird ausserdem gefordert, dass die Beleuchtungen im Gerät und für die Beobachtung identisch sind. Diese Situation ist technisch sehr anspruchsvoll zu realisieren, da die externen Beleuchtungsbedingungen variabel sind.

Aktuelle Handfarbmessgeräte, wie das SpectroEye der Firma GretagMacbeth AG, verwenden als Lichtquelle eine Glühlampe. Das Gerät besitzt ein Filterrad in der Messoptik. Mit den verschiedenen Messfiltern kann das Beleuchtungsspektrum und die Empfängercharakteristik modifiziert werden. Für eine gute Geräteübereinstimmung wird empfohlen, aufgehellte Proben mit dem eingebauten UV-Sperrfilter zu messen. Dieser Filter eliminiert den UV-Anteil des Beleuchtungslichts, so dass der optische Aufheller keine Fluoreszenz erzeugen kann. Die Anforderungen an eine genaue Kontrolle des Beleuchtungsspektrums entfallen. Problematisch mit der UV-Sperrfilter-Methode ist aber, dass die Messwerte nicht mit realen Betrachtungsbedingungen übereinstimmen, da typische Lichtquellen meistens einen UV-Anteil aufweisen und so die Aufheller anregen.

Exakte Messresultate werden mit der sogenannten bi-spektralen Messmethode ermöglicht. Ein bi-spektrales Messgerät hat einen Monochromator in der Beleuchtungsoptik und einen spektralen Analysator im Empfängerkanal. Die Messung erfolgt sequentiell. Für jede Beleuchtungswellenlänge wird ein komplettes Reflektionsspektrum gemessen und in Matrixform abgespeichert. Durch Multiplikation der Matrix mit einem Vektor, welcher die spektrale optische Energieverteilung der geforderten Lichtart aufweist, wird das resultierende Reflektionsspektrum der Probe ermittelt. Diese Messtechnik beinhaltet keine Einschränkung; der sequentielle Messablauf ist aber zeitaufwändig. Die Messtechnik ist teuer zu realisieren, so dass sie für den industriellen Einsatz nicht in Frage kommt. Als Beispiele für ein bi-spektrales Messsystem sind die Geräte BFC-450 der Firma Labsphere und CM-3800 der Firma Minolta zu nennen.

Die US-Patentschrift Nr. 6844931 beschreibt ein Farbmesssystem mit variabler Leuchtdioden- (LED)-Beleuchtung und einem spektralen Analysator im Empfänger. Die LED-Lichtquelle besteht aus einer Vielzahl verschieden farbiger, weisser und UV-LEDs. Die einzelnen LEDs können individuell angesteuert werden, so dass elektronisch die spektrale Beleuchtungsverteilung an ein gewünschtes Spektrum angepasst werden kann. Die Bestimmung des spektralen Reflexionsfaktors der Probe wird dann mit einer einzelnen Messung mit dem gewünschten Beleuchtungsspektrum ausgeführt. Weitere Verfahren zur Farbmessung von Proben mit optischen Aufheller sind aus der US 6,020,959 und der US 4,699,510 bekannt.

Ausgehend von diesem Stand der Technik soll durch die vorliegende Erfindung ein Verfahren für die Farbmessung von aufgehellten Proben geschaffen werden, welches die Genauigkeit der Messwerte verbessert und dabei gleichzeitig im Vergleich zu bekannten Messverfahren einfach und kostengünstig implementiert werden kann.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche.

Ganz allgemein ermittelt das erfindungsgemässe Verfahren den spektralen Reflexionsfaktor der Probe mit einer Doppelmessung und Kombination der dabei gewonnenen Messwerte. In der ersten Messung wird der spektrale Reflexionsfaktor mit der an sich bekannten UV-Sperrfilter-Technik ermittelt. In der zweiten Messung wird nur mit UV-Licht beleuchtet und das Fluoreszenzspektrum separat gemessen. Das Fluoreszenzspektrum wird dann mit spektral abhängigen Korrekturfaktoren gewichtet und zum spektralen Reflexionsfaktor der UV-Sperrfilter-Messung addiert. Die spektralen Korrekturfaktoren werden bei der Geräteherstellung für ein bestimmtes Set von Lichtarten bestimmt und im Gerät gespeichert.

### Das erfindungsgemässe Messverfahren bietet verschiedene Vorteile:

Es kann relativ einfach in bestehenden Geräten mit wechselbaren Messfiltem, wie zum Beispiel dem erwähnten SpectroEye, implementiert werden.

Das Messverfahren kann auch mit zwei verschiedenen Lichtquellen mit unterschiedlichem Emissionsspektrum realisiert werden, zum Beispiel durch die Kombination einer UV-LED und einer weissen LED.

Durch die separate Bewertung von Fluoreszenzspektrum und UV-Sperrfilter Messung entfällt die Anforderung an eine gute spektrale Übereinstimmung des Beleuchtungsspektrums im Gerät. Abweichungen zwischen verschiedenen Geräten können durch die Korrekturfaktoren kompensiert werden, so dass eine sehr hohe Geräteübereinstimmung erzielt wird.

Das Abspeichem von einem Set von Korrekturfaktoren für verschiedene Lichtarten ermöglicht anhand einer einzigen Doppelmessung die Ausgabe von äquivalenten Spektren und Farbwerten für alle Lichtarten. Diese Funktion ermöglicht eine Evaluation der Farbwiedergabeeigenschaften der Probe unter verschiedensten Betrachtungsbedingungen und ist sehr nützlich für die Auswahl der Farben und des Druckprozesses für die Reproduktion der Vorlage.

Das Messverfahren ist auch sinnvoll für die Anwendung in einem automatisierten Farbmesssystem für das Einmessen von gedruckten Farbcharts (Farbtafeln) für die Kalibrierung von Druckern. Anhand der Doppel-Messdaten können mit einer Color Management Software Farbprofile für verschiedene Lichtarten erzeugt werden.

Das Vorhandensein einer Beleuchtung nur im UV-Bereich ermöglicht ausserdem die Messung von gedruckten Sicherheitsmerkmalen, welche durch Anregung im UV-Bereich erzeugt werden.

Im folgenden wird die Erfindung anhand der Zeichnung näher erläutert. Es zeigen:
- Fig. 1: eine schematische Darstellung der wichtigsten Komponenten einer für das erfindungsgemässe Messverfahren geeigneten Messvorrichtung,
- Fig. 2: ein Blockschema der Bestimmung der im erfindungsgemässen Messverfahren verwendeten Korrekturparameter und
- Fig. 3: ein Blockschema eines Ausführungsbeispiels des erfindungsgemässen Messverfahrens.

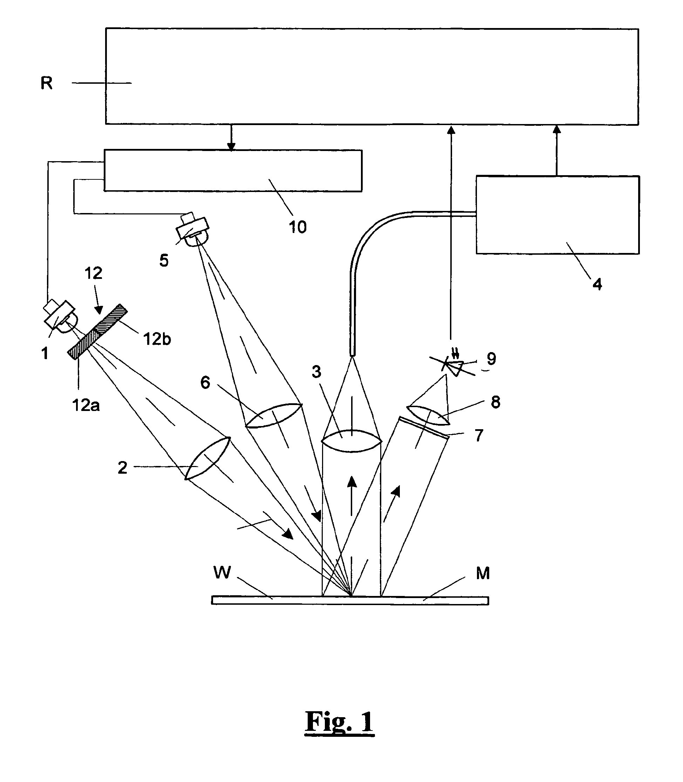

In der Farbmesstechnik werden bekanntlich verschiedene Messanordnungen (Messgeometrien) verwendet: diffuse Messgeometrien mit Ulbrichtskugel, 45°/0°-Messgeometrie und goniometrische Messverfahren mit mehr als nur einem Messwinkel. Die Messanordnungen sind in verschiedenen Normen oder Empfehlungen definiert, zum Beispiel in der Publikation CIE 15 der Commission International d'Eclairage und in der Norm DIN 5033 Teil 7. Die in der Fig. 1 dargestellte, für das erfindungsgemässe Messverfahren geeignete Messvorrichtung lehnt sich im prinzipiellen Aufbau an die bekannten Messgeometrien an.

Konkret umfasst die Messvorrichtung eine erste Lichtquelle 1, eine erste Beleuchtungsoptik 2, eine erste Aufpickoptik 3, einen ersten fotoelektrischen Wandler 4, eine zweite Lichtquelle 5, eine zweite Beleuchtungsoptik 6, einen UV-Filter 7, eine zweite Aufpickoptik 8, einen zweiten fotoelektrischen Wandler 9, eine Lampensteuerung 10 und einen Rechner R für die Steuerung der fotoelektrischen Wandler und zur Digitalisierung und weiteren Verarbeitung bzw. Speicherung der von den fotoelektrischen Wandlern erzeugten Messsignale. Die erste Lichtquelle 1, erste Beleuchtungsoptik 2, erste Aufpickoptik 3 und der erste Wandler 4 bilden zusammen eine erste, an sich bekannte Messanordnung, welche ein Messobjekt M bzw. eine Probe unter einem Einfallswinkel von 45° beleuchtet und das vom Messobjekt remittierte Messlicht unter einem Ausfallswinkel von 0° auffängt. Analog bilden die zweite Lichtquelle 5, die zweite Beleuchtungsoptik 6, der UV-Filter 7, die zweite Aufpickoptik 8 und der zweite Wandler 9 eine zweite, ebenfalls an sich bekannte Messanordnung mit hier symmetrischer Messgeometrie, wobei der Einfallswinkel der Beleuchtung und der Ausfallswinkel des remittierten Messlichts je z.B. 30° betragen.

Das erfindungsgemässe Messverfahren wird im folgenden rein beispielsweise anhand der Messkonfiguration der Fig. 1 erläutert. Sie ist jedoch an alle anderen gängigen Messanordnungen anpassbar.

Für die erste Lichtquelle 1 kommt typischerweise eine Lichtquelle zum Einsatz, welche ein kontinuierliches Emissionsspektrum über den UV- und sichtbaren Spektralbereich aufweist. Beispielsweise können Xenon-Bogenlampen oder Glühlampen verwendet werden. Der erste fotoelektrische Wandler 4 ist vorzugsweise als spektraler Analysator ausgestaltet, welcher im Minimum über den sichtbaren Spektralbereich von 400 bis 700 nm empfindlich ist. Der spektrale Analysator kann in an sich bekannter Weise als Spektrometer oder Colorimeter ausgebildet sein. Die erste Messanordnung erfüllt, wie schon erwähnt, die geometrischen Messbedingungen der normierten 45°/0°-Geometrie.

Wie weiter unten noch näher ausgeführt ist, werden beim erfindungsgemässen Messverfahren zwei Messungen durchgeführt, und zwar einmal unter Beleuchtung des Messobjekts M mit Licht ohne UV-Anteil und einmal unter Beleuchtung nur mit UV-Licht, wobei es auf die Reihenfolge der beiden Messungen nicht ankommt.

Zu diesem Zweck ist gemäss einer ersten Variante im Beleuchtungsstrahlengang der ersten Messanordnung eine verstellbare Filteranordnung 12 vorgesehen, die je nach Einstellung entweder nur für sichtbares Licht oder nur für UV-Licht durchlässig ist. Die Filteranordnung kann zum Beispiel durch ein Filterrad mit zwei passenden Filtern implementiert sein, so wie es im vorgenannten bekannten Gerät "SpectroEye" schon verwendet wird. Einer der beiden Filter 12a der Filteranordnung 12 ist ein UV-Sperrfilter, der als Kantenfilter ausgebildet ist, welcher Beleuchtungslicht unterhalb von 400 nm unterdrückt und eine gute Transmission über den sichtbaren Bereich aufweist. Der andere Filter 12b der Filteranordnung 12 ist ein dazu komplementärer Kantenfilter, welcher das Licht mit einer Wellenlänge oberhalb von 400 nm unterdrückt und für UV-Licht möglichst gut transparent ist. Dieser Filter (UV-Transmissionsfilter) kann auch so ausgestaltet sein, dass er eine bessere Anpassung des Beleuchtungsspektrums im UV-Bereich an eine gewünschte Referenzlichtart ermöglicht. Für die Doppelmessung wird, wie schon gesagt, zuerst einmal mit UV-Sperrfilter und dann mit UV-Transmissionsfilter gemessen oder umgekehrt.

Eine geeignete umschaltbare UV-/Nicht-UV-Doppelbeleuchtung kann gemäss einer zweiten Variante alternativ auch mittels zweier oder mehrer unterschiedlicher Lichtquellen erfolgen, welche einzeln ein- und ausgeschaltet werden können. Ein Teil der Lichtquellen darf dabei nur im UV-Bereich, der andere Teil der Lichtquellen nur im sichtbaren Bereich Licht emittieren. Dies kann realisiert werden, indem kontinuierliche Lichtquellen mit fest vorgesetzten Filtern verwendet werden. Alternativ können Lichtquellen eingesetzt werden, welche ohne zusätzliche Filterung ein spektral begrenztes Emissionsspektrum aufweisen. Typische Lichtquellen dieser Art sind Leuchtdioden (LEDs). Als UV-Lichtquelle können zum Beispiel die UV-LEDs NCCU033(T) und NCCU001E des Herstellers Nichia mit Peak-Wellenlängen von 365 nm resp. 380 nm einzeln oder als Kombination eingesetzt werden. Die UV-Sperrfilter-Charakteristik kann zum Beispiel mit weissen LEDs, wie sie vom Hersteller Lumileds unter dem Produktnamen Luxeon verkauft werden, realisiert werden. Diese weissen LEDs weisen ein kontinuierliches Emissionsspektrum im Bereich 420 nm bis 700 nm auf. In der Fig. 1 ist diese Implementierungsmöglichkeit für eine Doppelbeleuchtung mit gesteuerten Lichtquellen durch Hinzuziehung der zweiten Messanordnung 5-9 symbolisiert. Dabei ist die Filteranordnung 12 dann natürlich überflüssig.

Die Beleuchtung und Messung mit UV-Licht muss die 45°/0°-Normgeometrie nicht einhalten, das Messlicht kann unter irgendeinem Winkel auf das Messobjekt aufgebracht werden. Wenn für das UV-Licht und das sichtbare Licht separate Lichtquellen verwendet werden, ist es daher möglich, die UV-Lichtquellen unter einem kleineren Winkel als 45° anzuordnen, z.B. etwa 30°, wodurch oft eine kompaktere Bauform der Messvorrichtung erreicht werden kann.

Für das erfindungsgemässe Verfahren ist es erforderlich, dass die Messvorrichtung im weiteren einen Weissreferenzstandard W aufweist, welcher für den absoluten Reflektionsfaktor geeicht ist. Der Weissreferenzstandard kann nach bekannter Art aus einer weissen Keramikkachel bestehen, welche mit einem geeichten Referenz-Spektralphotometer geeicht worden ist. Bei Messungen am Weissreferenzstandard W tritt dieser (in an sich bekannter Weise) an die Stelle des eigentlichen Messobjekts M.

Ferner ist es erforderlich, dass die Messvorrichtung über einen UV-Referenzkanal für die UV-Lichtquelle verfügt, welcher dazu dient, den Lichtpegel der UV-Lichtquelle über die Lebensdauer des Geräts zu überwachen und Pegelschwankungen zu detektieren. Die Pegelschwankungen werden vom Messsystem bei der Messwertberechnung berücksichtigt. Der UV-Referenzkanal kann mit dem spektralen fotoelektrischen Wandler 4 realisiert werden, wenn dieser im UV-Bereich empfindlich ist und der Weissreferenzstandard W einen genügenden Reflektionsfaktor im UV-Bereich aufweist. Alternativ kann der UV-Referenzkanal mit einer Fotodiode (Wandler 9) realisiert werden, welche im UV-Bereich empfindlich ist und das vom Weissreferenzstandard reflektierte Licht misst. Eine dritte Möglichkeit für die Realisierung des UV-Referenzkanals ist der Einbau einer fluoreszierenden Probe, welche im UV-Bereich angeregt wird und Licht im sichtbaren Bereich erzeugt. Der sichtbare Fluoreszenzanteil kann dann mit dem spektralen Empfänger (Wandler 4) gemessen werden. Geeignete Fluoreszenzstandards werden zum Beispiel von der Firma Labsphere unter dem Produktnamen Spectralon angeboten.

Für die Durchführung der Doppelmessung muss der (durch die Aufpickoptik und den spektralen Wandler gebildete) Empfängerkanal radiometrisch geeicht sein. Die radiometrische Eichung wird durchgeführt, indem mit dem Empfängerkanal eine kontinuierliche Lichtquelle mit bekannter spektraler Signalverteilung (Referenzspektrum) gemessen wird. Die radiometrische Eichung wird in an sich bekannter Weise durch den Quotienten des Referenzspektrums durch die entsprechenden digitalisierten (spektralen) Messwerte des Empfängers gebildet.

Am Schluss des Produktionsablaufs der Messvorrichtung werden während der Gerätekalibration die für das erfindungsgemässe Messverfahren erforderlichen Korrekturfaktoren für die Verknüpfung des Fluoreszenzspektrums und des UV-Sperrfilter-Reflektionsspektrums bestimmt. Für die Kalibration wird ein Set von aufgehellten Farbproben (auf einem Aufheller enthaltenden Substrat gedruckte Farbproben) mit einem Referenzgerät mit bekannter Beleuchtung oder mit einem bi-spektralen Verfahren ausgemessen. Das Probenset umfasst im Minimum eine Substrat- bzw. Papiersorte mit für die Applikation typischen optischen Aufhellern. Die gemessenen Referenz-Reflektionsspektren werden für die gewünschten Lichtarten über den sichtbaren Bereich bestimmt und abgespeichert.

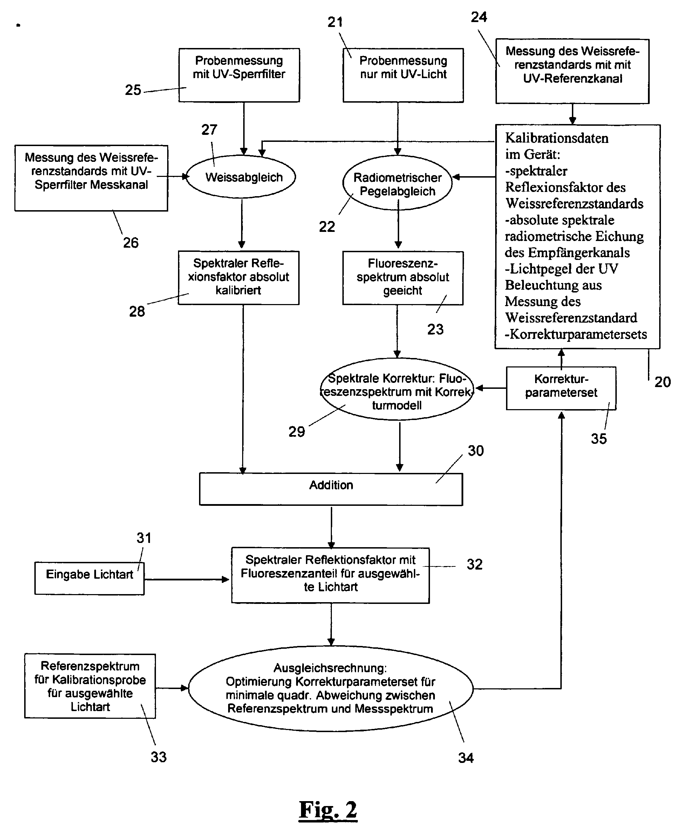

Das Kalibrationsprobenset wird dann mit der Messvorrichtung nach dem folgenden Ablauf gemessen, der in Fig. 2 schematisch zusammengefasst ist:
Zuerst wird mit der UV Beleuchtung eine Messung des Weissreferenzstandards W durchgeführt. Dieser Vorgang entspricht dem Block 24. Der Lichtpegel wird mit dem UV-Referenzkanal gemessen und der entsprechende Messwert wird in den Kalibrationsdaten abgespeichert (Block 20).

Dann wird eine Messung des Weissreferenzstandards W mit dem UV-Sperrfilter Messkanal durchgeführt. Die entsprechenden spektralen Messwerte werden abgespeichert (Block 26).

Als nächster Schritt wird das Fluoreszenzspektrum jeder (Kalibrations-)Probe mit der UV-Beleuchtung gemessen (Block 21) und über die radiometrische Eichung des spektralen Empfängers in energetische Einheiten umgerechnet (Block 22) und abgespeichert (Block 23). Die radiometrische Eichung ist in den Kalibrationsdaten des Geräts abgelegt (Block 20). Die UV-Beleuchtung wird mit dem gleichen Lichtpegel wie bei der Weissreferenzmessung (Block 24) durchgeführt. Der Lichtpegel wird durch die Steuerelektronik 10 geregelt.

Dann wird nach an sich bekannter Art der spektrale Reflexionsfaktor der Probe im UV-Sperrfilter-Modus gemessen (Beleuchtung nur mit sichtbarem Licht). Die Messwerte (Block 25) werden über den Abgleich mit dem Referenzweissmessung (Block 26) und den Kalibrationsdaten des Weissreferenzstandards in absolute Einheiten des spektralen Reflektionsfaktors transformiert (Block 27). Die resultierenden spektralen Reflexionsfaktoren werden abgespeichert (Block 28).

Das Fluoreszenzspektrum (Block 23) wird dann anhand eines Korrekturmodells korrigiert (Block 29), und die Messspektren werden aus der Summe des spektralen Reflexionsfaktors im UV-Sperrfilter-Modus mit dem korrigierten Fluoreszenzspektrum gebildet (Block 30).

Das Korrekturmodell für das Fluoreszenzspektrum umfasst spektral abhängige Skalierungsfaktoren, welche die relative Verteilung des Fluoreszenzspektrums anpassen. Die spektralen Skalierungsfaktoren beinhalten eine Variable für jeden spektralen Messwert im Bereich 420 nm bis 550 nm. Der absolute Pegel wird zusätzlich mit einem globalen Skalierungsfaktor angepasst. Die Skalierungsfaktoren werden im folgenden auch als Korrekturparameter (für das Korrekturmodell) bezeichnet.

Die folgenden Schritte werden für verschiedene Lichtarten (Block 31) durchgeführt, wobei für jede Lichtart ein entsprechendes Set von Korrekturfaktoren (Skalierfaktoren) errechnet und abgespeichert wird.

Die Berechnung der Skalierfaktoren erfolgt mittels einer an sich bekannten Ausgleichsrechnung (Block 34) anhand des zuvor ermittelten korrigierten spektralen Reflexionsfaktors mit Fluoreszenzanteil für die ausgewählte Lichtart (Block 32) und des erwähnten Referenzspektrums für dieselbe Lichtart (Block 33), wobei die Skalierfaktoren die zu bestimmenden Variablen der Ausgleichsrechnung sind. Die Ausgleichsrechnung wird dabei in an sich bekannter Weise so durchgeführt, dass die Unterschiede der Messspektren (Block 32) und der Referenzspektren (Block 33) minimiert werden (z.B. minimale quadratische Abweichung). Das Ergebnis der Ausgleichsrechnung liefert dann die Variablen bzw. Skalierfaktoren als Korrekturparameterset für die betreffende Lichtart (Block35). Die Korrekturparametersets für die einzelnen Lichtarten werden dann für die Verwendung im erfindungsgemässen Messverfahren in den Kalibrationsdaten des Geräts abgespeichert (Block 20).

Wenn die in der Ausgleichsrechnung erreichte Übereinstimmung nicht zufrieden stellend ist, können zusätzliche Korrekturparameter und Abhängigkeiten in das Korrekturmodell eingeführt werden. Es kann zum Beispiel eine zusätzliche Abhängigkeit der Korrekturfaktoren in Funktion des spektralen Reflexionsfaktors der Probe eingeführt werden.

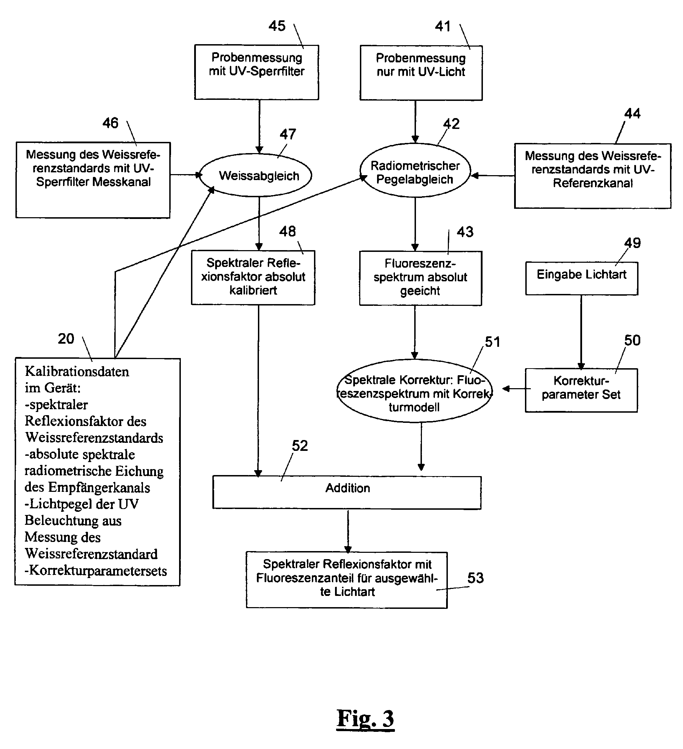

Nach diesen vorbereitenden Schritten kann eine eigentliche Probenmessung gemäss dem erfindungsgemässen Messverfahren durchgeführt werden. Die einzelnen Schritte des Verfahrens sind in der Fig. 3 schematisch zusammengefasst.

Für die Doppel-Messung in der Anwendung wird zuerst eine Messung auf dem kalibrierten Weissreferenzstandard W durchgeführt.

Bei dieser Messung wird zuerst der reflektierte Lichtpegel der UV Lichtquelle ermittelt (Block 44). Dann werden mit dem UV-Sperrfiltermesskanal die spektralen Messwerte für den Weissreferenzstandard gemessen (Block 46).

Nach der Weissmessung können Proben-Messungen ausgeführt werden. Diese Messungen werden als Doppel-Messung mit UV-Sperrfilter (Block 45) und nur mit UV-Licht (Block 41) ausgeführt. Beide Messungen werden mit dem gleichen Lichtpegel wie bei der Weissmessung durchgeführt. Die Lichtpegel werden durch die Steuerelektronik 10 konstant gehalten.

Die Probenmessung mit UV-Sperrfilter wird über einen Weissabgleich (Block 47) in absolute Reflektionsspektren (Block 48) transformiert. Der Weissabgleich wird durch die Multiplikation der Probenmesswerte im UV-Sperrfiltermodus mit dem Quotienten aus dem spektralen Reflektionsfaktor in den Kalibrationsdaten des Geräts (Block 20) und der Weissmessung (Block 46) ausgeführt.

Die Probenmessung ohne UV-Licht wird über einen radiometrischen Pegelabgleich (Block 42) in ein radiometrisches Fluoreszenzspektrum (Block 43) umgewandelt. Der radiometrische Pegelabgleich beinhaltet die Multiplikation der Probenmessung ohne UV-Licht (Block 41) mit der radiometrischen Eichung in den Kalibrationsdaten im Gerät (Block 20). Zusätzlich wird der Lichtpegel korrigiert, indem das Fluoreszenzspektrum mit dem Quotienten aus Lichtpegel der Weissmessung (Block 44) und Lichtpegel in den Kalibrationsdaten (Block 20) multipliziert wird.

Über die Geräte-Eingabe oder über eine Software-Schnittstelle kann eine gwünschte Lichtart ausgewählt werden (Block 49).

Das entsprechende Set von Korrekturparametern wird aus den Kalibrationsdaten im Gerät (Block 20) geladen (Block 50).

Das Korrekturparameterset wird im Korrekturmodell auf die absoluten Fluoreszenzspektren angewendet (Block 51).

Der spektrale Reflexionsfaktor im UV-Sperrfilter Modus (Block 48) und das korrigierte Fluoreszenzspektrum (Block 51) wird addiert (Block 52) und in das Reflektionsspektrum mit dem definierten Fluoreszenzanteil für die gewünschte Lichtart transformiert (Block 53).

Mit Hilfe der Korrekturfaktoren in den Kalibrationsdaten können nun für jede Proben-Messung die äquivalenten spektralen Reflexionsfaktoren für die gewünschten Lichtarten bestimmt und angezeigt werden.

Die so bestimmten Reflektionsspektren können nach bekannter Art farbmetrisch ausgewertet werden, z.B. zur Berechnung von Farbwerten. Es können ferner anhand nur einer einzigen Doppelmessung in an sich bekannter Weise Qualitätsparameter für die Farbwiedergabe der Probe, wie zum Beispiel ein Metamerie-Index oder Color Inconstancy Index, für verschiedene Lichtarten berechnet werden.

## Patentansprüche

1. Verfahren zur Farbmessung von auf Substraten mit Aufhellern gedruckten Proben (M), wobei ein spektraler Reflexionsfaktor einer Probe (M) ermittelt und für die Berechnung von die Farbe charakterisierenden Werten zur Verfügung gestellt wird, **dadurch gekennzeichnet, dass** der spektrale Reflexionsfaktor (53) der Probe (M) anhand einer Doppelmessung ermittelt wird, wobei in einer ersten Messung (45) ein roher spektraler Reflexionsfaktor (48) der Probe (M) unter Beleuchtung der Probe (M) mit Licht ohne UV-Anteil gemessen wird, in einer zweiten Messung (41) unter Beleuchtung der Probe (M) nur mit UV-Licht ein Fluoreszenzspektrum (43) der Probe (M) gemessen wird, das gemessene Fluoreszenzspektrum (43) anhand eines Korrekturmodells (51), in welchem das Fluoreszenzspektrum (43) mit einem Satz von spektral abhängigen Korrekturfaktoren (50) spektral gewichtet wird, in ein korrigiertes Fluoreszenzspektrum umgerechnet wird, und wobei der gemessene rohe spektrale Reflexionsfaktor (48) und das korrigierte Fluoreszenzspektrum zu einem korrigierten spektralem Reflexionsfaktor (53) addiert werden, wobei der korrigierte spektrale Reflexionsfaktor (53) für die Berechnung von die Farbe der Probe (M) charakterisierenden Werten herangezogen wird, wobei für verschiedene Lichtarten (49) individuelle Sätze von Korrekturfaktoren (50) für das Korrekturmodell (51) verwendet werden und dass je ein korrigierter spektraler Reflexionsfaktor (53) für eine oder mehrere ausgewählte Lichtart(en) unter Verwendung des der jeweiligen Lichtart zugeordneten individuellen Satzes von Korrekturparametern (50) berechnet wird, und wobei die Korrekturfaktoren (50) aus dem korrigierten spektralen Reflexionsfaktor (53) und einem Referenzspektrum (33) einer Kalibrationsprobe als Ergebnis einer Ausgleichsrechnung ermittelt (34) werden, bei welcher die Abweichungen zwischen dem korrigierten spektralen Reflexionsfaktor (53) und dem Referenzspektrum (33) minimiert werden.

2. Verfahren nach einem der vorangehenden Ansprüche, **dadurch gekennzeichnet, dass** für die Messung des rohen spektralen Reflexionsfaktors (48) und des Fluoreszenzspektrums eine kontinuierliche, auch im UV-Bereich emittierende Lichtquelle (1) mit wechselbaren Filtern (12) eingesetzt wird, wobei einer der Filter (12a) UV-Licht sperrt und ein anderer Filter (12b) Nicht-UV-Licht sperrt.

3. Verfahren nach einem der vorangehenden Ansprüche, **dadurch gekennzeichnet, dass** für die Messung des rohen spektralen Reflexionsfaktors (48) und des Fluoreszenzspektrums mehrere selektiv aktivierbare Lichtquellen (1, 5) mit spektral unterschiedlichen Emissionsspektren eingesetzt werden, wobei mindestens eine Lichtquelle (5) im UV-Bereich emittiert.

4. Verfahren nach Anspruch 3, **dadurch gekennzeichnet, dass** als Lichtquellen (1, 5) UV-Leuchtdioden und weiße Leuchtdioden eingesetzt werden.

5. Verfahren nach Anspruch 3 oder 4, **dadurch gekennzeichnet, dass** die im UV-Bereich emittierende Lichtquelle (5) die Probe (M) unter einem von der 45°/0°-Normgeometrie abweichenden, insbesondere kleineren Einfallswinkel beaufschlagt.

6. Verfahren nach einem der vorangehenden Ansprüche, **dadurch gekennzeichnet, dass** der Signalpegel des UV-Beleuchtungslichts mittels eines UV-Referenzmesskanals (4; 9) überwacht und in die Messung mit einbezogen wird.

7. Verfahren nach einem der vorangehenden Ansprüche, **dadurch gekennzeichnet, dass** der Signalpegel des UV-Beleuchtungslichts mittels eines Fluoreszenzstandards überwacht und in die Messung mit einbezogen wird.

8. Verfahren nach einem der vorangehenden Ansprüche, **dadurch gekennzeichnet, dass** aus dem korrigierten spektralen Reflexionsfaktor (53) für eine oder mehrere Lichtarten ein oder mehrere Qualitätsparameter für die Farbwiedergabe der Probe (M) berechnet werden.

9. Verfahren nach Anspruch 1, **dadurch gekennzeichnet, dass** die Reflexion eines Weißreferenzstandards (W) mit einem Spektralphotometer eines Empfängerkanals gemessen wird.

10. Verfahren nach Anspruch 9, **dadurch gekennzeichnet, dass** der Weißreferenzstandard (W) eine weiße Keramikkachel oder eine Weißpille ist.

## Claims

1. A process for the colour measurement of samples (M) printed on substrates with brighteners, whereby a spectral reflection factor of a sample (M) is determined and is made available for the calculation of values characterising the colour,
**characterised in that** the spectral reflection factor (53) of the sample (M) is determined by way of a double measurement, whereby in a first measurement (45) a raw spectral reflection factor (48) of the sample (M) is measured by illumination of the sample (M) with light without UV portion, a fluorescence spectrum (43) of the sample (M) is measured in a second measurement (41) by illumination of the sample (M) with only UV light, the measured fluorescence spectrum (43) is recalculated as a corrected fluorescence spectrum by way of a correction model (51) in which the fluorescence spectrum (43) is spectrally weighted with a set of spectrally dependent correction factors (50),
and whereby the measured raw spectral reflection factor (48) and the corrected fluorescence spectrum are added to form a corrected spectral reflection factor (53),
whereby the corrected spectral reflection factor (53) is used for the calculation of values characterising the colour of the sample (M),
whereby individual sets of correction factors (50) for the correction model (51) are used for different light types (49)
and **in that** and that respectively one corrected spectral correction factor (53) is calculated for one or more selected light types by using the individual set of correction parameters (50) associated with the respective light type,
and whereby the correction factors (50) are determined from the corrected spectral reflection factor (53) and a reference spectrum (33) of a calibration sample as the result of an equalisation calculation (34), in which the deviations between the corrected spectral reflection factor (53) and the reference spectrum (33) are minimised.

2. A process according to one of the preceding Claims,
**characterised in that** a continuous light source (1) emitting also in the UV range and with exchangeable filters (12) is used for the measurement of the raw spectral reflection factor (48) and the fluorescence spectrum, whereby one of the filters (12a) blocks UV light and another filter (12b) blocks non-UV light.

3. A process according to one of the preceding Claims,
**characterised in that** several selectively activatable light sources (1, 5) with spectrally different emission spectra are used for the measurement of the raw spectral reflection factor (48) and the fluorescence spectrum, whereby at least one light source (5) emits in the UV range.

4. A process according to Claim 3,
**characterised in that** UV light emitting diodes and white light emitting diodes are used as light sources (1, 5).

5. A process according to Claim 3 or 4,
**characterised in that** the light source (5) emitting in the UV range impinges the sample (M) at an angle of incidence deviating from the 45°/0° standard geometry, especially at a smaller angle.

6. A process according to one of the preceding Claims,
**characterised in that** the signal level of the UV illumination light is monitored by means of a UV reference channel (4; 9) and is included in the measurement.

7. A process according to one of the preceding Claims,
**characterised in that** the signal level of the UV illumination light is monitored by means of a fluorescence standard and is included in the measurement.

8. A process according to one of the preceding Claims,
**characterised in that** one or more quality parameters for the colour reproduction of the sample (M) are calculated from the corrected spectral reflection factor (53) for one or more light types.

9. A process according to Claim 1,
**characterised in that** the reflection of a white reference standard (W) is measured with a spectrophotometer of a receiver channel.

10. A process according to Claim 9,
**characterised in that** the white reference standard (W) is a white ceramic tile or a white pill.

## Revendications

1. Procédé pour la mesure des couleurs d'échantillons (M) imprimés sur des substrats avec des agents de blanchiment optique, un facteur de réflexion spectral d'un échantillon (M) étant déterminé et étant mis à disposition pour le calcul de valeurs caractérisant la couleur, **caractérisé en ce que** le facteur de réflexion (53) spectral de l'échantillon (M) est déterminé à l'aide d'une double mesure, un facteur de réflexion (48) spectral brut de l'échantillon (M) étant mesuré dans une première mesure (45) avec l'éclairage de l'échantillon (M) avec de la lumière sans partie UV, un spectre de fluorescence (43) de l'échantillon (M) étant mesuré dans une seconde mesure (41) avec l'éclairage de l'échantillon (M) seulement avec de la lumière UV, le spectre de fluorescence (43) mesuré étant converti à l'aide d'un modèle de correction (51), dans lequel le spectre de fluorescence (43) est pondéré au niveau spectral avec un ensemble de facteurs de correction (51) dépendants au plan spectral, en un spectre de fluorescence corrigé, et le facteur de réflexion (48) spectral brut mesuré et le spectre de fluorescence corrigé étant ajoutés pour former un facteur de réflexion (53) spectral corrigé, le facteur de réflexion (53) spectral corrigé étant utilisé pour le calcul de valeurs caractérisant la couleur de l'échantillon (M), des ensembles individuels de facteur de correction (50) pour le modèle de calcul (51) étant utilisés pour différents types de lumière (49) et **en ce qu'**un facteur de réflexion (53) spectrale corrigé est calculé pour un ou plusieurs types de lumière sélectionnés en utilisant l'ensemble individuel des paramètres de correction (50), attribué au type de lumière concerné, et les facteurs de correction (50) étant déterminés (34) à partir du facteur de réflexion (53) spectral corrigé et d'un spectre de référence (33) d'un échantillon de calibrage comme résultat d'un calcul d'équilibre, dans lequel les écarts entre le facteur de réflexion (53) spectral corrigé et le spectre de référence (33) sont minimisés.

2. Procédé selon l'une quelconque des revendications précédentes, **caractérisé en ce qu'**une source lumineuse (1) continue, émettant également dans la plage UV, est utilisée avec des filtres (12) amovibles pour la mesure du facteur de réflexion (48) spectral brut et du spectre de fluorescence, l'un des filtres (12a) bloquant la lumière UV et un autre filtre (12b) bloquant la lumière non UV.

3. Procédé selon l'une quelconque des revendications précédentes, **caractérisé en ce que** plusieurs sources lumineuses (1, 5) pouvant être activées de façon sélective sont utilisées avec des spectres d'émission différents au plan spectral pour la mesure du facteur de réflexion (48) spectrale brut, au moins une source lumineuse (5) émettant dans la plage UV.

4. Procédé selon la revendication 3, **caractérisé en ce que** des diodes électroluminescentes UV et des diodes électroluminescentes blanches sont utilisées comme sources lumineuses (1, 5).

5. Procédé selon la revendication 3 ou 4, **caractérisé en ce que** la source lumineuse (5) émettant dans la plage UV alimente l'échantillon (M) sous un angle d'incidence différent de la géométrie standard 45°/0°, en particulier plus petit.

6. Procédé selon l'une quelconque des revendications précédentes, **caractérisé en ce que** le niveau de signal de la lumière d'éclairage UV est contrôlé au moyen d'un canal de mesure de référence UV (4 ; 9) et est intégré dans la mesure.

7. Procédé selon l'une quelconque des revendications précédentes, **caractérisé en ce que** le niveau de signal de la lumière d'éclairage UV est contrôlé au moyen d'un standard de fluorescence et est intégré dans la mesure.

8. Procédé selon l'une quelconque des revendications précédentes, **caractérisé en ce que** un ou plusieurs paramètres de qualité pour la reproduction des couleurs de l'échantillon (M) sont calculés à partir du facteur de réflexion (53) spectral corrigé pour un ou plusieurs types de lumière.

9. Procédé selon la revendication 1, **caractérisé en ce que** la réflexion d'un standard de référence blanc (W) est mesuré avec un photomètre spectral d'un canal récepteur.

10. Procédé selon la revendication 9, **caractérisé en ce que** le standard de référence blanc (W) est un carreau de céramique blanc ou une pastille blanche.
